(19) Europäisches Patentamt
European Patent Office
Office européen des brevets

(11) **EP 3 147 528 B1**

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(51) Int Cl.:
**F16D 55/02** *(2006.01)*    **F16D 65/092** *(2006.01)*
**G01L 5/16** *(2020.01)*    **F16D 55/22** *(2006.01)*

(21) Anmeldenummer: **16001826.3**

(22) Anmeldetag: **19.08.2016**

(54) **MESSEINRICHTUNG UND VERFAHREN ZUR ERFASSUNG EINES SCHLEIFMOMENTS**

MEASURING DEVICE AND METHOD FOR RECORDING A GRINDING TORQUE

DISPOSITIF DE MESURE ET PROCEDE DE DETECTION D'UN MOMENT DE PONÇAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2015 DE 102015011951**

(43) Veröffentlichungstag der Anmeldung:
**29.03.2017 Patentblatt 2017/13**

(73) Patentinhaber: **WABCO Europe BVBA**
**1170 Brüssel (BE)**

(72) Erfinder:
• **Beyer, Frank**
**68239 Mannheim (DE)**

• **Jungmann, Hans-Christian**
**69517 Gorxheimertal (DE)**

(74) Vertreter: **Copi, Joachim**
**Wabco GmbH**
**Am Lindener Hafen 21**
**30453 Hannover (DE)**

(56) Entgegenhaltungen:
**EP-A1- 2 895 767**    **WO-A1-2014/184112**
**DE-A1- 2 539 596**    **DE-A1-102006 058 882**
**JP-A- 2011 190 865**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Messeinrichtung zur Erfassung eines Schleifmoments zwischen einer Bremsscheibe und einem Bremsbelag einer Scheibenbremse, mit einem Belagträger zum Tragen des Bremsbelags und einem Kraftmessaufnehmer zum Messen einer aus dem Schleifmoment resultierenden und auf den Bremsbelag wirkenden Kraft.

Die Erfindung betrifft ferner eine Scheibenbremse, insbesondere für ein Kraftfahrzeug, mit einer Bremsscheibe und einem Bremsbelag, wobei die Bremsscheibe und der Bremsbelag relativ zueinander bewegbar sind, und einer Messeinrichtung zur Erfassung eines Schleifmoments zwischen der Bremsscheibe und dem Bremsbelag.

Zusätzlich betrifft die Erfindung ein Verfahren zur Erfassung eines Schleifmoments zwischen einer Bremsscheibe und einem Bremsbelag einer Scheibenbremse.

Moderne Scheibenbremsen für die Verwendung in Kraftfahrzeugen weisen üblicherweise eine Bremsscheibe und zwei relativ zu der Bremsscheibe bewegliche Bremsbeläge auf, welche auf gegenüberliegenden Seiten der Bremsscheibe angeordnet sind. Die Bremsbeläge werden jeweils von einem Belagträger getragen und im Anwendungsfall mittels eines Bremssattels an die Bremsscheibe gepresst.

Zur Umsetzung einer Linearbewegung der Bremsbeläge ist ein Bremssattel der Scheibenbremse in axialer Richtung der Bremsscheibe, beispielsweise schwimmend, gelagert. Bei Kontakt, beispielsweise nach erfolgtem Bremsvorgang oder bei einer Schwimmsattellagerung kann es zu unbeabsichtigten Schleifmomenten zwischen der Bremsscheibe und einem Bremsbelag der Scheibenbremse kommen. Untersuchungen haben gezeigt, dass insbesondere nach Beendigung eines regulären Bremsvorgangs ein unbeabsichtigtes Schleifmoment zwischen der Bremsscheibe und einem Bremsbelag der Scheibenbremse anliegt. Ein derartiges Schleifmoment ruft eine Bremswirkung hervor und führt somit zu einem erhöhten Kraftstoffverbrauch sowie zu einem zusätzlichen Verschleiß der Bremsbeläge und der Bremsscheibe.

Aus diesem Grund existieren Bestrebungen, derartige Schleifmomente in Scheibenbremsen zu eliminieren oder zumindest zu verringern. Zur Entwicklung solcher Scheibenbremsen bedarf es geeigneter Messeinrichtungen und - Verfahren zur Erfassung des Schleifmoments zwischen der Bremsscheibe und einem Bremsbelag der Scheibenbremse.

Die bekannten Messeinrichtungen und Verfahren sind jedoch nicht zufriedenstellendem Maße in der Lage, geringe Schleifmomente in einem "unteren" Messbereich von etwa 5 Nm oder weniger zu erfassen. Beispielsweise schlägt WO 2014/184112 A1 vor, ein Messmodul zur Erfassung des Schleifmoments in einem Bremsbelag und/oder einem Bremsbelagträger anzuordnen, wobei das Messmodul dazu eingerichtet ist, die Kräfte zwischen dem Messmodul und dem Bremsträger der Scheibenbremse zu ermitteln. Bei einem derartigen Messkonzept ist es jedoch notwendig, dass die von der Niederhaltefeder auf den Bremsbelagträger bzw. den Bremsbelag ausgeübten Vorspannkräfte überwunden werden, bevor eine Messung mittels des Messmoduls stattfinden kann. Aufgrund der Vorspannkraft der Niederhaltefeder, welche regelmäßig im Bereich von etwa 100 N zu verorten ist, sowie dem Reibwert zwischen Bremsbelag und Bremsträger und dem Wirkradius des Bremsbelags, erlaubt dieses Messkonzept lediglich die Erfassung von Schleifmomenten in einem Bereich von über 5 Nm.

Die DE 10 2006 058 882 A1 beschreibt eine separate Erfassung von Zuspann- und Reibkräften an einer Bremse. Dabei weist die Vorrichtung 2 Sensoren zur Messung der Normalkraft und der Reibkraft auf. Die Vorrichtung erfasst getrennt, die zwischen dem Reibbelag und einem relativ zu einem Reibbelag bewegbar angeordneten Gegenstand auftretende Normalkraft und Reibkraft. Der Reibbelag ist als zweiteilige Rahmenkonstruktion aufgebaut. Ein Schubfeld, welches zwei Dehnungssensoren aufweist ist an dem äußeren Randbereich mit dem Belagträger und der Rahmenkonstruktion verbunden.

Für die Entwicklung von Scheibenbremsen mit keinem oder lediglich einem äußerst geringen Schleifmoment sind folglich Messeinrichtungen und Verfahren notwendig, welche Schleifmomente in einem unteren Messbereich erfassen können. Derartige Messeinrichtungen und Verfahren sind aus dem Stand der Technik nicht bekannt.

Der Erfindung lag folglich die Aufgabe zugrunde, eine Möglichkeit bereitzustellen, ein möglichst geringes Schleifmoment zwischen einer Bremsscheibe und einem Bremsbelag einer Scheibenbremse, insbesondere ein Schleifmoments in einem Messbereich von unter 5 Nm, zu erfassen, wobei der Belagträger ein erstes Belagträgerteil und ein zweites Belagträgerteil aufweist und der Kraftmessaufnehmer dazu eingerichtet ist, die zwischen dem ersten Belagträgerteil und dem zweiten Belagträgerteil wirkende Kraft zu erfassen.

Die Aufgabe wird gelöst durch eine Messeinrichtung der eingangs genannten Art, wobei der Kraftmessaufnehmer vollständig in dem ersten Belagträgerteil und dem zweiten Belagträgerteil aufgenommen ist und einen vordefinierten Messbereich von 0 bis 1000 N aufweist.

Die Erfindung macht sich die Erkenntnis zunutze, dass bei der Kraftmessung zwischen dem ersten Belagträgerteil und dem zweiten Belagträgerteil Wechselwirkungskräfte entstehen. Diese entstehen unabhängig davon, ob bzw. dass etwaige Vorspannkräfte, wie beispielsweise die Vorspannkraft der Niederhaltefeder, überwunden werden müssen. Folglich kann auch ein geringes Schleifmoment zwischen der Bremsscheibe und dem Bremsbelag der Scheibenbremse erfasst werden, da das Vorliegen eines Schleifmoments unmittelbar zu einer Druckkraft zwischen dem ersten Belagträgerteil und dem zweiten Belagträgerteil führt. Somit lässt sich durch die erfindungsgemäße Messeinrichtung bereits ein äußerst geringes Schleifmoment zwischen der Bremsscheibe und dem Bremsbelag der Scheibenbremse ermitteln, insbesondere auch ein Schleifmoment in einem Messbereich von unter 5 Nm.

Vorzugsweise ist der Kraftmessaufnehmer zumindest abschnittsweise innerhalb des Belagträgers angeordnet. Insbesondere ist zumindest ein Teil des Kraftmessaufnehmers innerhalb des ersten Belagträgerteils angeordnet. Alternativ oder zusätzlich ist zumindest ein Teil des Kraftmessaufnehmers in dem zweiten Belagträgerteil angeordnet.

Vorzugsweise ist der Kraftmessaufnehmer als piezoelektrischer Kraftmessaufnehmer ausgebildet, insbesondere als kapazitiver Kraftmessaufnehmer.

In einer bevorzugten Ausführungsform der erfindungsgemäßen Messeinrichtung sind das erste Belagträgerteil und das zweite Belagträgerteil relativ zueinander bewegbar. Dadurch, dass das erste Belagträgerteil und das zweite Belagträgerteil relativ zueinander bewegbar sind, kann die Messung des Kraftmessaufnehmers beeinflusst werden. Insbesondere kann auf diese Weise die auf den Kraftmessaufnehmer wirkende Kraft beschränkt und/oder eliminiert werden, sodass einer Beschädigung des Kraftmessaufnehmers durch übermäßige Beanspruchung vorgebeugt ist. Vorzugsweise sind der erste Belagträger und der zweite Belagträger in nur eine Richtung relativ zueinander bewegbar, wobei diese Richtung der Kraftaufnahmerichtung des Kraftmessaufnehmers entspricht. In einer alternativen Ausführungsform sind das erste Belagträgerteil und das zweite Belagträgerteil zusätzlich senkrecht zu der Kraftaufnahmerichtung des Kraftmessaufnehmers relativ zueinander bewegbar. Eine Relativbewegung zwischen dem ersten Belagträgerteil und dem zweiten Belagträgerteil wird vorzugsweise durch das Einleiten eines Bremsvorgangs und somit durch das Anpressen des Bremsbelags an die Bremsscheibe initiiert. Eine weitere Relativbewegung zwischen dem ersten Belagträgerteil und dem zweiten Belagträgerteil wird vorzugsweise durch Beendigung oder Unterbrechung eines Bremsvorgangs und somit durch das Aufheben oder Verringern des Anpressdrucks des Bremsbelags an der Bremsscheibe initiiert.

In einer weiteren vorteilhaften Ausführungsform der erfindungsgemäßen Messeinrichtung weist das erste Belagträgerteil eine erste Ausnehmung auf, in welche zumindest ein Teil des zweiten Belagträgerteils aufgenommen ist. Vorzugsweise erstreckt sich dieser Teil des zweiten Belagträgerteils in die erste Ausnehmung des ersten Belagträgerteils. Ferner ist der zweite Belagträgerteil vorzugsweise korrespondierend zu der ersten Ausnehmung des ersten Belagträgerteils ausgebildet. Die Ausnehmung des ersten Belagträgerteils und der zweite Belagträgerteil sind derart aneinander angepasst, dass das erste Belagträgerteil und das zweite Belagträgerteil relativ zu einander beweglich sind. Abhängig von der Ausbildung der ersten Ausnehmung des ersten Belagträgerteils und der Ausbildung des zweiten Belagträgerteils ergibt sich zwischen dem ersten Belagträgerteil und dem zweiten Belagträgerteil ein Bewegungsspiel.

In einer weiteren bevorzugten Ausführungsform der erfindungsgemäßen Messeinrichtung weist das erste Belagträgerteil eine zweite Ausnehmung auf, in welcher zumindest ein Teil des Kraftmessaufnehmers aufgenommen ist. Vorzugsweise weist auch das zweite Belagträgerteil eine Ausnehmung auf, in welche zumindest ein Teil des Kraftmessaufnehmers aufgenommen ist. Besonders bevorzugt ist der Kraftmessaufnehmer vollständig in dem ersten Belagträgerteil und dem zweiten Belagträgerteil aufgenommen.

Die erfindungsgemäße Messeinrichtung wird ferner dadurch vorteilhaft weitergebildet, dass das erste Belagträgerteil eine Kontaktfläche für den Kraftmessaufnehmer aufweist. Vorzugsweise ist die Kontaktfläche des ersten Belagträgerteils der ersten Ausnehmung zugewandt. In einer besonders bevorzugten Ausführungsform erstreckt sich die Kontaktfläche entlang der Kontur der ersten Ausnehmung. Somit wird die Kontaktfläche an einer Seite von der Kontur der Ausnehmung begrenzt.

In einer weiteren bevorzugten Ausführungsform der erfindungsgemäßen Messeinrichtung weist die erste Ausnehmung des ersten Belagträgerteils eine Innenkontur und das zweite Belagträgerteil eine Außenkontur auf, wobei die Form der Außenkontur im Wesentlichen der Form der Innenkontur entspricht und die Größe der Außenkontur und die Größe der Innenkontur ein Bewegungsspiel zwischen dem ersten Belagträgerteil und dem zweiten Belagträgerteil definieren. Vorzugsweise definieren die Größe der Außenkontur und die Größe der Innenkontur ein Bewegungsspiel in einem Bereich von 0,05 mm bis 4 mm, besonders bevorzugt ein Bewegungsspiel in einem Bereich von 0,2 mm bis 1 mm.

In einer weiteren Ausführungsform der erfindungsgemäßen Messeinrichtung sind das erste Belagträgerteil und das zweite Belagträgerteil durch verschraubte Querstreben derart miteinander verbunden, dass eine Relativbewegung zwischen dem ersten Belagträgerteil und dem zweiten Belagträgerteil parallel zu der Mittelachse der Bremsscheibe verhindert oder zumindest begrenzt ist.

In einer weiteren bevorzugten Ausführungsform der erfindungsgemäßen Messeinrichtung ist der Kraftmessaufnehmer zum Messen in einer Messrichtung ein- und ausgerichtet, wobei die Messrichtung im Wesentlichen tangential zu einer Mittelachse der Bremsscheibe verläuft. Insbesondere ist der Kraftmessaufnehmer in einem Seitenbereich des Belagträgers angeordnet, sodass die Messrichtung im Bereich von 0 bis 5 Grad von der Tangentialrichtung der Mittelachse der Bremsscheibe abweichen kann. Die Angabe "tangential zu einer Mittelachse der Bremsscheibe" wird hierbei als diejenige Richtung verstanden, die senkrecht zur Mittelachse der Bremsscheibe und senkrecht zu einer von der Mittelachse ausgehenden Radialachse verläuft.

In einer weiteren vorteilhaften Ausführungsform der erfindungsgemäßen Messeinrichtung ist der Kraftmessaufnehmer als Teil einer Messanordnung ausgebildet, wobei die Messanordnung an dem ersten Belagträgerteil oder dem zweiten Belagträgerteil befestigt ist und der Kraftmessaufnehmer in Messrichtung innerhalb der Messanordnung bewegbar ist. Vorzugsweise umfasst die Messanordnung ferner einen Gleitstein, welcher ebenfalls innerhalb der Messanordnung in Messrichtung des Kraftmessaufnehmer bewegbar ist und dazu ausgebildet ist, die Kraft von dem ersten Belagträgerteil oder dem zweiten Belagträgerteil auf den Kraftmessaufnehmer zu übertragen. Vorzugsweise weist die Messanordnung ferner einen Einsatz und eine Bohrung auf, in welcher zur Begrenzung der Bewegung des Kraftmessaufnehmers innerhalb der Messanordnung ein Sicherungsring angeordnet ist.

In einer weiteren bevorzugten Ausführungsform der erfindungsgemäßen Messeinrichtung weist die Messanordnung ein Federelement auf, welches auf den Kraftmessaufnehmer wirkt und einer Annäherung des ersten Belagträgerteils und des zweiten Belagträgerteils zueinander entgegenwirkt. Das Federelement weist im verbauten Zustand und bei einer maximalen Beabstandung des ersten Belagträgerteils von dem zweiten Belagträgerteil eine Null-Lage auf. In der Null-Lage übt das Federelement vorzugsweise keine Vorspannkraft auf den Kraftmessaufnehmer aus.

In einer alternativen bevorzugten Ausführungsform spannt das Federelement den Kraftmessaufnehmer gegen den zweiten Belagträgerteil vor. Vorzugsweise weist die Messanordnung ein mit dem zweiten Belagträgerteil verbundenen Einsatz auf, und das Federelement spannt den Kraftmessaufnehmer gegen den Einsatz vor. Somit übt das Federelement bereits in der Null-Lage eine Vorspannkraft auf den Kraftmessaufnehmer aus.

In einer alternativen Ausführungsform spannt das Federelement den Kraftmessaufnehmer gegen den ersten Belagträgerteil, insbesondere gegen die Kontaktfläche des ersten Belagträgerteils vor.

Das Federelement ist vorzugsweise als Tellerfederpaket ausgebildet und stützt sich an einer Druckscheibe ab, welche gegen den Sicherungsring innerhalb der Bohrung drückt. Die erfindungsgemäße Messeinrichtung wird ferner dadurch vorteilhaft weitergebildet, dass die Messanordnung ein oder mehrere Montagelöcher aufweist und die Messanordnung mittels einer oder mehreren Schrauben mit dem ersten Belagträgerteil oder dem zweiten Belagträgerteil verschraubt ist.

Bei der erfindungsgemäßen Messeinrichtung weist der Kraftmessaufnehmer einen vordefinierten Messbereich auf, wobei die Summe der Vorspannkraft und der aus der Nachgiebigkeit des Federelements und dem maximalen Bewegungsspiel zwischen dem ersten Belagträgerteil und dem zweiten Belagträgerteil resultierenden Reaktionskraft innerhalb des vordefinierten Messbereichs liegt. Der vordefinierte Messbereich ist 0 bis 1000 N, vorzugsweise 0 bis 500 N, und besonders bevorzugt 0 bis 50 N. Durch die - begrenzte - relative Verschiebbarkeit des ersten Belagträgerteils und des zweiten Belagträgerteils sowie der Bewegbarkeit des Kraftmessaufnehmers innerhalb der Messeinrichtung kann der Kraftmessaufnehmer so zuverlässig gegen eine Überbelastung geschützt werden. Zur Erfassung eines geringen Schleifmoments zwischen der Bremsscheibe und dem Bremsbelag der Scheibenbremse ist der Einsatz von Kraftmessaufnehmern erforderlich, welche äußerst geringe Kräfte erfassen können. Werden derartige Kraftmessaufnehmer mit einer Kraft beaufschlagt, welche oberhalb eines vordefinierten Messbereichs liegt, kann es zu Beschädigungen und somit auch zu einem Funktionsausfall des Kraftmessaufnehmers kommen. Durch den erfindungsgemäßen Aufbau wird die maximal auf den Kraftmessaufnehmer wirkende Kraft auf die Summe der Vorspannkraft und der aus der Nachgiebigkeit des Federelements und dem maximalen Bewegungsspiel zwischen dem ersten Belagträgerteil und dem zweiten Belagträgerteil resultierenden Reaktionskraft begrenzt, sodass eine Beschädigung oder ein Funktionsausfall des Kraftmessaufnehmers vermieden wird.

Eine weitere bevorzugte Ausführungsform der erfindungsgemäßen Messeinrichtung weist eine Auswerteeinheit auf, welche signalleitend mit dem Kraftmessaufnehmer verbunden ist. Die Auswerteeinheit ist dazu eingerichtet, auf Grundlage eines vom Kraftmessaufnehmer zur Verfügung gestellten Signals das Schleifmoment zwischen der Bremsscheibe und dem Bremsbelag der Scheibenbremse zu ermitteln. Vorzugsweise sind in der Auswerteeinheit Berechnungsparameter hinterlegt, welche zur Ermittlung des Schleifmoments zwischen der Bremsscheibe und dem Bremsbelag der Scheibenbremse herangezogen werden. Vorzugsweise umfassen diese Berechnungsparameter einen Wirkradius r. In bevorzugten Ausführungsformen werden zwei Messeinrichtungen eingesetzt, beispielsweise in je einem Bremsbelag nach Maßgabe der hier beschriebenen bevorzugten Ausführungsformen. Die beiden die jeweilige Messeinrichtung tragenden Belagträger liegen mittels der jeweiligen Bremsbeläge vorzugsweise beidseits einer Bremsscheibe an. In dem Fall berechnet sich das Schleifmoment als Summe der beiden Einzelmomente. Da für beide Seiten nicht notwendigerweise derselbe Wirkradius vorliegen muss, werden dann mehrere Wirkradien $r_1$ und $r_2$ angesetzt. Vorzugsweise ermittelt die Auswerteeinheit das Schleifmoment auf Grundlage der folgenden Berechnungsformeln:

$$M = F*r$$

für eine Messeinrichtung, und

$$M = F_1 * r_1 + F_2 * r_2$$

für zwei Messeinrichtungen.

In der oben bezeichneten Berechnungsformel sind das Schleifmoment mit M, die vom Kraftmessaufnehmer einer einzigen Messeinrichtung erfasste Kraft als F, die vom Kraftmessaufnehmer der ersten Messeinrichtung (von zweien) erfasste Kraft als $F_1$ und die vom Kraftmessaufnehmer der zweiten Messeinrichtung (von zweien) erfasste Kraft als $F_2$ bezeichnet.

Die der Erfindung zugrundeliegende Aufgabe wird ferner durch eine Scheibenbremse der eingangs genannten Art gelöst, wobei die Messeinrichtung zur Erfassung des Schleifmoments zwischen der Bremsscheibe und dem Bremsbelag nach einem der vorstehend beschriebenen Ausführungsbeispiele ausgebildet ist.

Hinsichtlich der Vorteile der erfindungsgemäßen Scheibenbremse wird auf die Vorteile der erfindungsgemäßen Messeinrichtung verwiesen.

Die der Erfindung zugrundeliegende Aufgabe wird ferner durch ein Verfahren der eingangs genannten Art gelöst, mit den Schritten: Bereitstellen eines Belagträgers

zum Tragen des Bremsbelags, wobei der Belagträger ein erstes Belagträgerteil und ein zweites Belagträgerteil aufweist und Erfassen einer aus dem Schleifmoment resultierenden und auf den Bremsbelag wirkenden Kraft, wobei der Schritt des Erfassens einer aus dem Schleifmoment resultierenden und auf den Bremsbelag wirkenden Kraft den folgenden Schritt umfasst:

- Erfassen einer zwischen dem ersten Belagträgerteil und dem zweiten Belagträgerteil wirkenden Kraft, und wobei der Schritt des Erfassens einer zwischen dem ersten Belagträgerteil und dem zweiten Belagträgerteil wirkenden Kraft einen oder beide der folgenden Schritte umfasst:

  - Messen einer in eine Messrichtung wirkenden Druckkraft zwischen dem ersten Belagträgerteil und dem zweiten Belagträgerteil mittels eines Kraftmessaufnehmers, wobei die Messrichtung vorzugsweise im Wesentlichen der tangential zu einer Mittelachse der Bremsscheibe verläuft und wobei der Kraftmessaufnehmer vollständig in dem ersten Belagträgerteil und dem zweiten Belagträgerteil aufgenommen ist,
  - Ermitteln des Schleifmoments zwischen der Bremsscheibe und dem Bremsbelag auf Grundlage der zwischen dem ersten Belagträgerteil 3a und dem zweiten Belagträgerteil erfassten Kraft,
  - Ausüben einer Vorspannkraft auf den Kraftmessaufnehmer 5 entgegen der Messrichtung, wobei die Summe der Vorspannkraft und der aus der Nachgiebigkeit des Federelements und dem maximalen Bewegungsspiel zwischen dem ersten Belagträgerteil und dem zweiten Belagträgerteil resultierende Reaktionskraft innerhalb des vordefinierten Messbereichs von 0 bis 1000 N des Kraftmessaufnehmers liegt;
- Bewegen des Kraftmessaufnehmers in Messrichtung relativ zu dem ersten Belagträgerteil 3a und/oder dem zweiten Belagträgerteil.

In einer weiteren bevorzugten Ausführungsform des Verfahrens erfolgt der Schritt des Ermittelns des Schleifmoments zwischen der Bremsscheibe und dem Bremsbelag zusätzlich auf Grundlage eines Wirkradius r oder mehrerer Wirkradien r1 und r2, insbesondere mit der nachfolgenden Berechnungsformeln:

$$M = F * r$$

bzw.

$$M = F1 * r1 + F2 * r2$$

In der oben bezeichneten Berechnungsformel sind das Schleifmoment mit M, die vom Kraftmessaufnehmer einer ersten Messeinrichtung erfasste Kraft als F1 und die vom Kraftmessaufnehmer einer zweiten Messeinrichtung erfasste Kraft als F2 bezeichnet.

Eine weitere erfindungsgemäße Ausführungsform des erfindungsgemäßen Verfahrens umfasst den folgenden Schritt:

- Initiieren einer Relativbewegung zwischen dem ersten Belagträgerteil und dem zweiten Belagträgerteil.

Das Initiieren einer Relativbewegung zwischen dem ersten Belagträgerteil und dem zweiten Belagträgerteil umfasst vorzugsweise den Schritt:

- Durchführen einer Bremsung mittels Anpressen des Bremsbelags an die Bremsscheibe.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen, die in den Ansprüchen definiert ist.

Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:

Fig. 1    ein Ausführungsbeispiel der erfindungsgemäßen Scheibenbremse in einer perspektivischen Darstellung;

Fig. 2    ein Ausführungsbeispiel der erfindungsgemäßen Messeinrichtung in einer perspektivischen Darstellung;

Fig. 3    die Messeinrichtung aus Fig. 2 in einer Teil-Explosionsdarstellung;

Fig. 4    ein Ausführungsbeispiel der erfindungsgemäßen Messeinrichtung in einer Seitenansicht;

Fig. 5    die Messeinrichtung aus Fig. 4 in einer Schnittdarstellung.

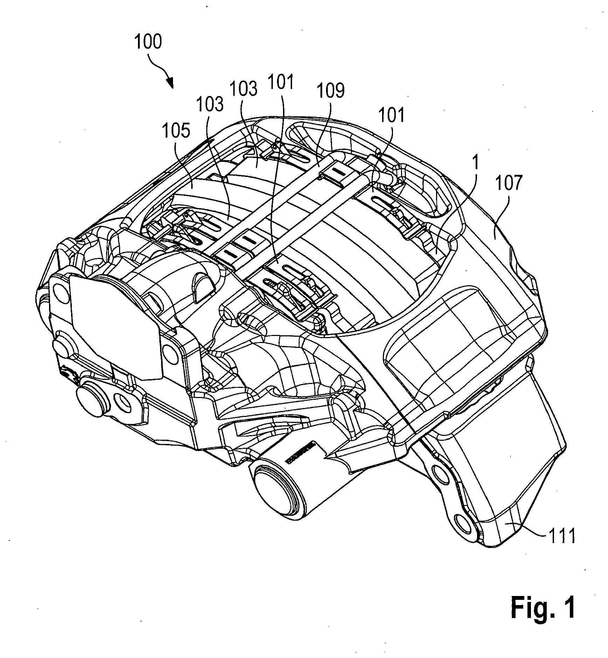

Gemäß Fig. 1 weist die erfindungsgemäße Scheibenbremse 100, welche für die Verwendung in einem Kraftfahrzeug ausgebildet ist, eine Bremsscheibe 105 (teilweise dargestellt) und zwei auf gegenüberliegenden Seiten der Bremsscheibe 105 angeordnete Bremsbeläge 103 auf, wobei die Bremsscheibe 105 und die Bremsbeläge 103 relativ zueinander bewegbar sind. Zumindest ein Bremsbelag 103 wird von einem Belagträger getragen, welcher Teil einer erfindungsgemäßen Messeinrichtung 1 ist.

Die Scheibenbremse 100 umfasst ferner einen Bremssattel 107, welcher axial auf Führungsbolzen eines Bremsenträgers 111 gleitet. Die Bremsbeläge 103 werden im Bremsenträger 111 axial verschiebbar geführt und abgestützt. Die Halterung der Bremsbeläge 103 erfolgt durch einen Niederhaltebügel 109 und durch Niederhaltefedern 101.

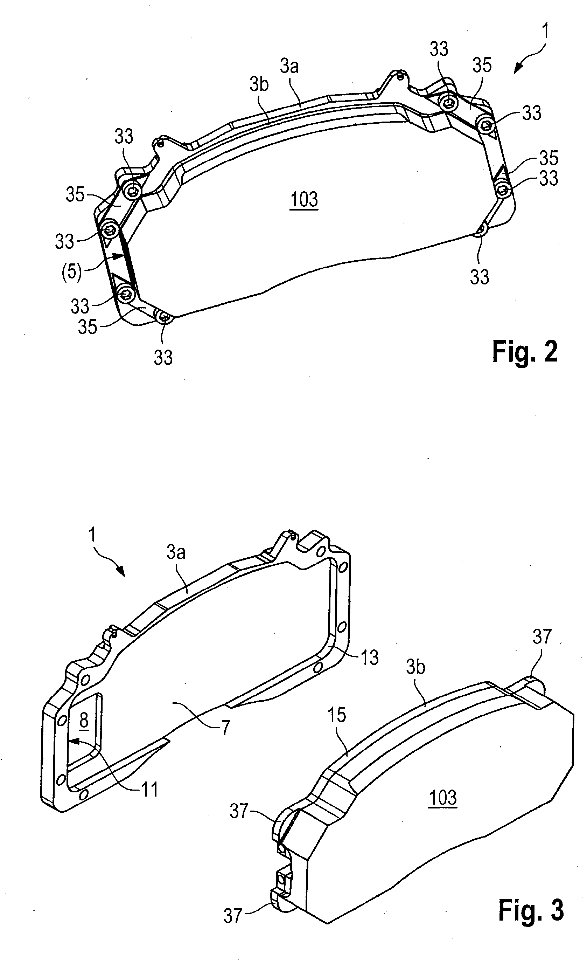

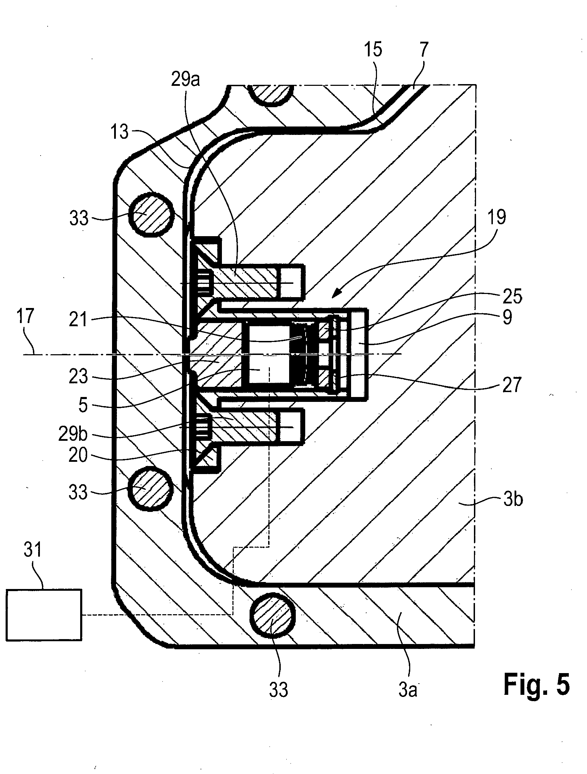

Die in Fig. 2 dargestellte erfindungsgemäße Messeinrichtung 1 dient zur Erfassung eines Schleifmoments zwischen einer Bremsscheibe und einem Bremsbelag 103 einer Scheibenbremse. Die Messeinrichtung 1 umfasst einen Belagträger 3a, 3b zum Tragen des Bremsbelags 103 und einen Kraftmessaufnehmer 5 (Fig. 5) zum Messen einer aus dem Schleifmoment resultierenden und auf den Bremsbelag 103 wirkenden Kraft. Der Belagträger 3a, 3b weist ein erstes Belagträgerteil 3a und ein zweites Belagträgerteil 3b auf, wobei der Kraftmessaufnehmer 5 dazu eingerichtet ist, die zwischen dem ersten Belagträgerteil 3a und dem zweiten Belagträgerteil 3b wirkende Kraft zu erfassen. Im vorliegenden Ausführungsbeispiel ist ein Teil des Kraftmessaufnehmers 5 innerhalb der Belagträgerteile 3a und 3b angeordnet.

Das erste Belagträgerteil 3a und das zweite Belagträgerteil 3b sind in der Messrichtung des Kraftmessaufnehmers relativ zueinander bewegbar und durch Querstreben 35 derart miteinander verbunden, dass eine Relativbewegung zwischen dem ersten Belagträgerteil 3a und dem zweiten Belagträgerteil 3b parallel zu einer Mittelachse der Bremsscheibe, welche im Wesentlichen senkrecht zu der Messrichtung des Kraftmessaufnehmers 5 verläuft, verhindert oder zumindest begrenzt ist.

Die Querstreben 35 wirken formschlüssig mit seitlichen Nasen (Bezugszeichen 37, Figur 3) des zweiten Belagträgerteils 3b zusammen, sodass sich durch Einstellen von Verschraubungen 33 das Bewegungsspiel parallel zu der Mittelachse der Bremsscheibe zwischen dem ersten Belagträgerteil 3a und dem zweiten Belagträgerteil 3b einstellen lässt. Die Verschraubungen 33 werden jeweils durch eine Schraube, welche in einen Gewindeabschnitt des ersten Belagträgerteils 3a eingreift, gebildet.

Fig. 3 zeigt, dass das erste Belagträgerteil 3a eine erste Ausnehmung 7 aufweist, in welche, im montierten Zustand, ein Teil des zweiten Belagträgerteils 3b aufgenommen ist. Die erste Ausnehmung 7 des ersten Belagträgerteils 3a weist eine Innenkontur 13 auf. Das zweite Belagträgerteil 3b weist eine Außenkontur 15 auf. Die Form der Außenkontur 15 entspricht im Wesentlichen der Form der Innenkontur 13, wobei die Größe der Außenkontur 15 und die Größe der Innenkontur 13 ein Bewegungsspiel zwischen dem ersten Belagträgerteil 3a und dem zweiten Belagträgerteil 3b definieren. Ein Abschnitt der Innenkontur 13 des ersten Belagträgerteils 3a bildet eine Kontaktfläche 11 für den Kraftmessaufnehmer (nicht dargestellt) aus, wobei die Kontaktfläche 11 der ersten Ausnehmung 7 zugewandt ist. Die Darstellung zeigt ferner die seitlichen Nasen 37 des zweiten Belagträgerteils 3b, welche mit den Querstreben 35 (siehe Fig. 2) formschlüssig zusammenwirken. An dem zweiten Belagträgerteil 3b ist der Bremsbelag 103 befestigt. Von der ersten Ausnehmung 7 des ersten Belagträgerteils 3a erstreckt sich eine zweite Ausnehmung 8 in die dem zweiten Belagträgerteil 3b abgewandte Richtung. Die erste Ausnehmung 7 und die zweite Ausnehmung 8 in dem ersten Belagträgerteil 3a bilden zusammen ein Durchgangsloch in dem ersten Belagträgerteil 3a aus.

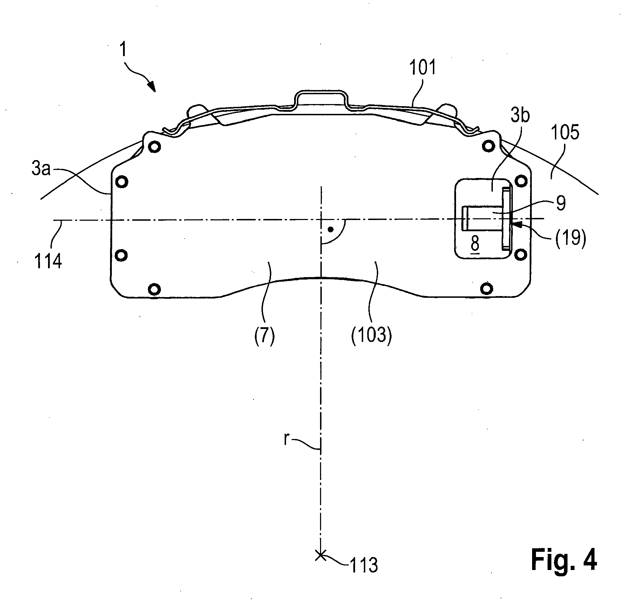

Gemäß Fig. 4 ist die Form des Bremsbelags 103 zum Zusammenwirken mit einer Niederhaltefeder 101 ausgebildet. Das erste Belagträgerteil 3a weist eine erste Ausnehmung 7 (Fig. 3) und zweite Ausnehmung 8 auf, welche zusammen ein Durchgangsloch ausbilden. Das zweite Belagträgerteil 3b weist ebenfalls eine Ausnehmung 9 auf, welche sich an das Durchgangsloch des ersten Belagträgerteils 3a anschließt und sich in Richtung der Bremsscheibe bzw. des Bremsbelags 103 (Fig. 2) erstreckt. Die Ausnehmung 9 des zweiten Belagträgerteils 3b ist für die Aufnahme einer Messanordnung 19 (Fig. 5) eingerichtet, wobei die Messanordnung 19 den Kraftmessaufnehmer 5 (Fig.5) umfasst. Die Ausnehmung 9 des zweiten Belagträgerteils 3b umfasst zwei zylindrische Abschnitte unterschiedlichen Durchmessers. Ferner umfasst die Ausnehmung 9 des zweiten Belagträgerteils 3b zwei Gewindebohrungen zur Aufnahme von Schrauben 29a,b (Fig. 5) zum Befestigen der Messanordnung 19. Der in der Ausnehmung 9 des zweiten Belagträgerteils 3b anzuordnende Kraftmessaufnehmer ist zum Messen in einer Messrichtung ein- und ausgerichtet, wobei die Messrichtung im Wesentlichen tangential zu der Mittelachse 113 der Bremsscheibe 105 verläuft. Der Kraftmessaufnehmer der Messanordnung 19 wird aufgrund der Lage der Ausnehmung 9 in einem Seitenbereich des Belagträgers 3b angeordnet, sodass die Mittelachse 114 der Messrichtung 17 im Bereich von 0 bis 5 Grad von der Tangentialrichtung der Mittelachse 113 der Bremsscheibe 105 abweichen kann. Der Abstand zwischen der Mittelachse 113 der Bremsscheibe 105 und der Mittelachse 114 der Messrichtung 17 entspricht dem Wirkradius r.

Die Schnittdarstellung aus Fig. 5 zeigt, dass in der Ausnehmung 9 eine Messanordnung 19 angeordnet ist. Die Messanordnung 19 umfasst einen Einsatz 20, einen Gleitstein 23, welcher mit dem Kraftmessaufnehmer 5 zusammenwirkt. Der Kraftmessaufnehmer 5 weist einen vordefinierten Messbereich auf und wird durch ein Federelement 21 gegen den Einsatz 20 der Messanordnung 19 vorgespannt. Die Summe der Vorspannkraft des Federelements 21 und der aus der Nachgiebigkeit des Federelements 21 und dem maximalen Bewegungsspiel zwischen dem ersten Belagträgerteil 3a und dem zweiten Belagträgerteil 3b resultierenden Reaktionskraft liegt innerhalb des vordefinierten Messbereichs des Kraftmessaufnehmers 5. Das Federelement 21 ist über eine Druckscheibe 25 an einem Sicherungsring 27 axial gesichert. Der Gleitstein 23 und der Kraftmessaufnehmer 5 sind innerhalb einer Bohrung der Messanordnung 19 in Messrichtung 17 axial verschiebbar. Die Messanordnung 19 ist mittels Schrauben 29a, 29b an dem zweiten Belagträgerteil 3b befestigt.

Die Messeinrichtung 1 weist ferner eine Auswerteeinheit 31 auf, welche signalleitend mit dem Kraftmessaufnehmer 5 verbunden ist, wobei die Auswerteeinheit dazu eingerichtet ist, auf Grundlage eines vom Kraftmessaufnehmer 5 zur Verfügung gestellten Signals das Schleifmoment zwischen der Bremsscheibe und dem Bremsbelag 103 der Scheibenbremse 100 zu ermitteln.

Bezugszeichenliste (Bestandteil der Beschreibung)

| | |
|---|---|
| 1 | Messeinrichtung |
| 3a, 3b | Belagträgerteile |
| 5 | Kraftmessaufnehmer |
| 7 | erste Ausnehmung im ersten Belagträgerteil |
| 8 | zweite Ausnehmung im ersten Belagträgerteil |
| 9 | Ausnehmung im zweiten Belagträgerteil |
| 11 | Kontaktfläche |
| 13 | Innenkontur |
| 15 | Außenkontur |
| 17 | Messrichtung |
| 19 | Messanordnung |
| 20 | Einsatz |
| 21 | Federelement |
| 23 | Gleitstein |
| 25 | Druckscheibe |
| 27 | Sicherungsring |
| 29a, 29b | Schrauben |
| 31 | Auswerteeinheit |
| 33 | Verschraubungen |
| 35 | Querstreben |
| 37 | seitliche Nasen |
| 100 | Scheibenbremse |
| 101 | Niederhaltefeder |
| 103 | Bremsbelag |
| 105 | Bremsscheibe |
| 107 | Bremssattel |
| 109 | Niederhaltebügel |
| 111 | Bremsenträger |
| 113 | Mittelachse der Bremsscheibe |
| 114 | Mittelachse der Messrichtung |
| r | Wirkradius |

**Patentansprüche**

1. Messeinrichtung (1) zur Erfassung eines Schleifmoments zwischen einer Bremsscheibe (105) und einem Bremsbelag (103) einer Scheibenbremse (100), mit einem Belagträger (3a, 3b) zum Tragen des Bremsbelags (103), und einem Kraftmessaufnehmer (5) zum Messen einer aus dem Schleifmoment resultierenden und auf den Bremsbelag (103) wirkenden Kraft, wobei der Belagträger (3a, 3b) ein erstes Belagträgerteil (3a) und ein zweites Belagträgerteil (3b) aufweist, wobei der Kraftmessaufnehmer (5) dazu eingerichtet ist, die zwischen dem ersten Belagträgerteil (3a) und dem zweiten Belagträgerteil (3b) wirkende Kraft zu erfassen, **dadurch gekennzeichnet, dass** der Kraftmessaufnehmer (5) vollständig in dem ersten Belagträgerteil 3a und dem zweiten Belagträgerteil 3b aufgenommen ist und einen vordefinierten Messbereich von 0 bis 1000 N aufweist.

2. Messeinrichtung (1) nach Anspruch 1, **dadurch gekennzeichnet, dass** das erste Belagträgerteil (3a) und das zweite Belagträgerteil (3b) relativ zueinander bewegbar sind.

3. Messeinrichtung (1) nach Anspruch 1 oder 2, **dadurch gekennzeichnet, dass** erste Belagträgerteil (3a) eine erste Ausnehmung (7) aufweist, in welche zumindest ein Teil des zweiten Belagträgerteils (3b) aufgenommen ist.

4. Messeinrichtung (1) nach Anspruch 3, **dadurch gekennzeichnet, dass** das erste Belagträgerteil (3a) eine Kontaktfläche (11) für den Kraftmessaufnehmer (5) aufweist, wobei die Kontaktfläche (11) vorzugsweise der ersten Ausnehmung (7) zugewandt ist.

5. Messeinrichtung (1) nach Anspruch 3 oder 4, **dadurch gekennzeichnet, dass** die erste Ausnehmung (7) des ersten Belagträgerteils (3a) eine Innenkontur (13) und das zweite Belagträgerteil (3b) eine Außenkontur (15) aufweist, wobei die Form der Außenkontur (15) im Wesentlichen der Form der Innenkontur (13) entspricht und die Größe der Außenkontur (15) und die Größe der Innenkontur (13) ein Bewegungsspiel zwischen dem ersten Belagträgerteil (3a) und dem zweiten Belagträgerteil (3b) definieren.

6. Messeinrichtung (1) nach einem der vorstehenden Ansprüche, **dadurch gekennzeichnet, dass** der Kraftmessaufnehmer (5) zum Messen in einer Messrichtung (17) ein- und ausgerichtet ist, wobei die Messrichtung (17) im Wesentlichen tangential zu einer Mittelachse (113) der Bremsscheibe verläuft.

7. Messeinrichtung (1) nach Anspruch 6, **dadurch gekennzeichnet, dass** der Kraftmessaufnehmer (5) als Teil einer Messanordnung (19) ausgebildet ist, wobei die Messanordnung (19) an dem ersten Belagträgerteil (3a) oder dem zweiten Belagträgerteil (3b) befestigt ist und der Kraftmessaufnehmer (5) in Messrichtung (17) innerhalb der Messanordnung (19) bewegbar ist.

8. Messeinrichtung (1) nach Anspruch 7, **dadurch gekennzeichnet, dass** die Messanordnung (19) ein Federelement (21) umfasst, welches auf den Kraftmessaufnehmer (5) wirkt und einer Annäherung des ersten Belagträgerteils (3a) und des zweiten Belagträgerteils (3b) entgegenwirkt.

9. Messeinrichtung (1) nach Anspruch 8, **dadurch gekennzeichnet, dass** das Federelement (21) den Kraftmessaufnehmer (5) gegen den zweiten Belagträgerteil (3b) vorspannt, wobei vorzugsweise die Messanordnung (19) einen Einsatz (20) aufweist und das Federelement den Kraftmessaufnehmer (5) gegen den Einsatz (20) vorspannt.

10. Messeinrichtung (1) nach Anspruch 9, **dadurch gekennzeichnet, dass** der Kraftmessaufnehmer (5) einen vordefinierten Messbereich aufweist, wobei die Summe der Vorspannkraft und der aus der Nachgiebigkeit des Federelements (21) und dem maximalen Bewegungsspiel zwischen dem ersten Belagträgerteil (3a) und dem zweiten Belagträgerteil (3b) resultierenden Reaktionskraft innerhalb des vordefinierten Messbereichs liegt.

11. Messeinrichtung (1) nach einem der vorstehenden Ansprüche, **gekennzeichnet durch** eine Auswerteeinheit (31), welche signalleitend mit dem Kraftmessaufnehmer (5) verbunden ist, wobei die Auswerteeinheit (31) dazu eingerichtet ist, auf Grundlage eines vom Kraftmessaufnehmer (5) zur Verfügung gestellten Signals das Schleifmoment zwischen der Bremsscheibe und dem Bremsbelag (103) der Scheibenbremse (100) zu ermitteln.

12. Scheibenbremse (100), insbesondere für ein Kraftfahrzeug, mit einer Bremsscheibe (105) und einem Bremsbelag (103), wobei die Bremsscheibe (105) und der Bremsbelag (103) relativ zueinander bewegbar sind, und einer Messeinrichtung (1) zur Erfassung eines Schleifmoments zwischen der Bremsscheibe (105) und dem Bremsbelag (103), **dadurch gekennzeichnet, dass** die Messeinrichtung (1) nach einem der vorstehenden Ansprüche ausgebildet ist.

13. Verfahren zur Erfassung eines Schleifmoments zwischen einer Bremsscheibe (105) und einem Bremsbelag (103) einer Scheibenbremse (100), mit den Schritten:

    - Bereitstellen eines Belagträgers (3a, 3b) zum Tragen des Bremsbelags (103), wobei der Belagträger (3a, 3b) ein erstes Belagträgerteil (3a) und ein zweites Belagträgerteil (3b) aufweist; und
    - Erfassen einer aus dem Schleifmoment resultierenden und auf den Bremsbelag (103) wirkenden Kraft, wobei der Schritt des Erfassens einer aus dem Schleifmoment resultierenden und auf den Bremsbelag (103) wirkenden Kraft den folgenden Schritt umfasst:

        - Erfassen einer zwischen dem ersten Belagträgerteil (3a) und dem zweiten Belagträgerteil (3b) wirkenden Kraft, und wobei der Schritt des Erfassens einer zwischen dem ersten Belagträgerteil (3a) und dem zweiten Belagträgerteil (3b) wirkenden Kraft einen oder beide der folgenden Schritte umfasst:

           - Messen einer in eine Messrichtung (17) wirkenden Druckkraft zwischen dem ersten Belagträgerteil (3a) und dem zweiten Belagträgerteil (3b) mittels eines Kraftmessaufnehmers (5), wobei die Messrichtung (17) vorzugsweise im Wesentlichen der tangential zu einer Mittelachse (113) der Bremsscheibe (105) verläuft, und wobei der Kraftmessaufnehmer (5) vollständig in dem ersten Belagträgerteil (3a) und dem zweiten Belagträgerteil (3b) aufgenommen ist,

- Ermitteln des Schleifmoments zwischen der Bremsscheibe (105) und dem Bremsbelag (103) auf Grundlage der zwischen dem ersten Belagträgerteil (3a) und dem zweiten Belagträgerteil (3b) erfassten Kraft, **dadurch gekennzeichnet, dass** das Verfahren beide der folgenden Schritte umfasst:

- Ausüben einer Vorspannkraft auf den Kraftmessaufnehmer (5) entgegen der Messrichtung (17), wobei die Summe der Vorspannkraft und der aus der Nachgiebigkeit des Federelements (21) und dem maximalen Bewegungsspiel zwischen dem ersten Belagträgerteil (3a) und dem zweiten Belagträgerteil (3b) resultierende Reaktionskraft innerhalb eines vordefinierten Messbereichs von 0 bis 1000 N des Kraftmessaufnehmers (5) liegt;
- Bewegen des Kraftmessaufnehmers (5) in Messrichtung (17) relativ zu dem ersten Belagträgerteil (3a) und/oder dem zweiten Belagträgerteil (3b).

14. Verfahren nach Anspruch 13, wobei das Verfahren den folgenden Schritt umfasst:

- Initiieren einer Relativbewegung zwischen dem ersten Belagträgerteil (3a) und dem zweiten Belagträgerteil (3b),

wobei das Initiieren einer Relativbewegung zwischen dem ersten Belagträgerteil (3a) und dem zweiten Belagträgerteil (3b) vorzugsweise den folgenden Schritt umfasst:

- Durchführen einer Bremsung mittels Anpressen des Bremsbelags (103) an die Bremsscheibe (105).

## Claims

1. Measuring device (1) for detecting a rubbing torque between a brake disc (105) and a brake pad (103) of a disc brake (100), comprising a brake pad support (3a, 3b) for supporting the brake pad (103) and a force-measuring pickup (5) for measuring a force which results from the rubbing torque and acts on the brake pad (103), wherein the brake support (3a, 3b) has a first pad support part (3a) and a second pad support part (3b), wherein the force-measuring pickup (5) is designed to detect the force which acts between the first pad support part (3a) and the second pad support part (3b), **characterized in that** the force-measuring pickup (5) is accommodated completely in the first pad support part (3a) and the second pad support part (3b) and has a predefined measuring range of from 0 to 1000 N.

2. Measuring device (1) according to Claim 1, **characterized in that** the first pad support part (3a) and the second pad support part (3b) can be moved relative to one another.

3. Measuring device (1) according to Claim 1 or 2, **characterized in that** the first pad support part (3a) has a first recess (7) in which at least a portion of the second pad support part (3b) is accommodated.

4. Measuring device (1) according to Claim 3, **characterized in that** the first pad support part (3a) has a contact area (11) for the force-measuring pickup (5), wherein the contact area (11) preferably faces the first recess (7).

5. Measuring device (1) according to Claim 3 or 4, **characterized in that** the first recess (7) of the first pad support part (3a) has an inner contour (13) and the second pad support part (3b) has an outer contour (15), wherein the shape of the outer contour (15) substantially corresponds to the shape of the inner contour (13) and the size of the outer contour (15) and the size of the inner contour (13) define movement play between the first pad support part (3a) and the second pad support part (3b).

6. Measuring device (1) according to one of the preceding claims, **characterized in that** the force-measuring pickup (5) is designed and geared for measurement in a measuring direction (17), wherein the measuring direction (17) runs substantially tangentially to a centre axis (113) of the brake disc.

7. Measuring device (1) according to Claim 6, **characterized in that** the force-measuring pickup (5) is designed as part of a measuring arrangement (19), wherein the measuring arrangement (19) is fastened to the first pad support part (3a) or to the second pad support part (3b) and the force-measuring pickup (5) can be moved in the measuring direction (17) within the measuring arrangement (19).

8. Measuring device (1) according to Claim 7, **charac-**

**terized in that** the measuring arrangement (19) comprises a spring element (21) which acts on the force-measuring pickup (5) and prevents the first pad support part (3a) and the second pad support part (3b) from approaching.

9. Measuring device (1) according to Claim 8, **characterized in that** the spring element (21) pretensions the force-measuring pickup (5) against the second pad support part (3b), wherein the measuring arrangement (19) preferably has an insert (20) and the spring element pretensions the force-measuring pickup (5) against the insert (20).

10. Measuring device (1) according to Claim 9, **characterized in that** the force-measuring pickup (5) has a predefined measuring range, wherein the sum of the pretensioning force and the reaction force which results from the compliance of the spring element (21) and the maximum movement play between the first pad support part (3a) and the second pad support part (3b) lies within the predefined measuring range.

11. Measuring device (1) according to one of the preceding claims, **characterized by** an evaluation unit (31) which is connected in a signal-transmitting manner to the force-measuring pickup (5), wherein the evaluation unit (31) is designed to ascertain the rubbing torque between the brake disc and the brake pad (103) of the disc brake (100) on the basis of a signal which is provided by the force-measuring pickup (5).

12. Disc brake (100), in particular for a motor vehicle, comprising a brake disc (105) and a brake pad (103), wherein the brake disc (105) and the brake pad (103) can be moved relative to one another, and a measuring device (1) for detecting a rubbing torque between the brake disc (105) and the brake pad (103), **characterized in that** the measuring device (1) is designed according to one of the preceding claims.

13. Method for detecting a rubbing torque between a brake disc (105) and a brake pad (103) of a disc brake (100), comprising the steps of:

- providing a pad support (3a, 3b) for supporting the brake pad (103), wherein the pad support (3a, 3b) has a first pad support part (3a) and a second pad support part (3b); and
- detecting a force which results from the rubbing torque and acts on the brake pad (103), wherein the step of detecting a force which results from the rubbing torque and acts on the brake pad (103) comprises the following step:

- detecting a force which acts between the first pad support part (3a) and the second pad support part (3b), and wherein the step of detecting a force which acts between the first pad support part (3a) and the second pad support part (3b) comprises one or both of the following steps:

- measuring a compressive force, which acts in a measuring direction (17), between the first pad support part (3a) and the second pad support part (3b) by means of a force-measuring pickup (5), wherein the measuring direction (17) preferably runs substantially tangentially to a centre axis (113) of the brake disc (105), and wherein the force-measuring pickup (5) is completely accommodated in the first pad support part (3a) and the second pad support part (3b),
- ascertaining the rubbing torque between the brake disc (105) and the brake pad (103) on the basis of the force which is detected between the first pad support part (3a) and the second pad support part (3b), **characterized in that** the method comprises both of the following steps:
- exerting a pretensioning force on the force-measuring pickup (5) counter to the measuring direction (17), wherein the sum of the pretensioning force and the reaction force which results from the compliance of the spring element (21) and the maximum movement play between the first pad support part (3a) and the second pad support part (3b) lies within a predefined measuring range of from 0 to 1000 N of the force-measuring pickup (5);
- moving the force-measuring pickup (5) in the measuring direction (17) relative to the first pad support part (3a) and/or the second pad support part (3b) .

14. Method according to Claim 13, wherein the method comprises the following step:

- initiating a relative movement between the first pad support part (3a) and the second pad support part (3b), wherein initiating a relative movement between the first pad support part (3a) and the second pad support part (3b) preferably comprises the following step:
- carrying out a braking operation by means of pressing the brake pad (103) against the brake disc (105).

**Revendications**

1. Dispositif de mesure (1) pour détecter un moment d'abrasion entre un disque de frein (105) et une garniture de frein (103) d'un frein à disque (100), comprenant un support de garniture (3a, 3b) pour porter la garniture de frein (103), et un capteur de mesure de force (5) pour mesurer une force résultant du moment d'abrasion et agissant sur la garniture de frein (103), le support de garniture (3a, 3b) présentant une première partie de support de garniture (3a) et une deuxième partie de support de garniture (3b), le capteur de mesure de force (5) étant prévu pour détecter la force agissant entre la première partie de support de garniture (3a) et la deuxième partie de support de garniture (3b), **caractérisé en ce que** le capteur de mesure de force (5) est complètement reçu dans la première partie de support de garniture (3a) et la deuxième partie de support de garniture (3b) et présente une plage de mesure prédéfinie de 0 à 1000 N.

2. Dispositif de mesure (1) selon la revendication 1, **caractérisé en ce que** la première partie de support de garniture (3a) et la deuxième partie de support de garniture (3b) peuvent être déplacées l'une par rapport à l'autre.

3. Dispositif de mesure (1) selon la revendication 1 ou 2, **caractérisé en ce que** la première partie de support de garniture (3a) présente un premier évidement (7) dans lequel est reçue au moins une partie de la deuxième partie de support de garniture (3b).

4. Dispositif de mesure (1) selon la revendication 3, **caractérisé en ce que** la première partie de support de garniture (3a) présente une surface de contact (11) pour le capteur de mesure de force (5), la surface de contact (11) étant de préférence tournée vers le premier évidement (7).

5. Dispositif de mesure (1) selon la revendication 3 ou 4, **caractérisé en ce que** le premier évidement (7) de la première partie de support de garniture (3a) présente un contour intérieur (13) et la deuxième partie de support de garniture (3b) présente un contour extérieur (15), la forme du contour extérieur (15) correspondant essentiellement à la forme du contour intérieur (13) et la dimension du contour extérieur (15) et la dimension du contour intérieur (13) définissant un jeu de déplacement entre la première partie de support de garniture (3a) et la deuxième partie de support de garniture (3b).

6. Dispositif de mesure (1) selon l'une quelconque des revendications précédentes, **caractérisé en ce que** le capteur de mesure de force (5) est prévu et orienté de manière à mesurer dans une direction de mesure (17), la direction de mesure (17) s'étendant essentiellement tangentiellement à un axe médian (113) du disque de frein.

7. Dispositif de mesure (1) selon la revendication 6, **caractérisé en ce que** le capteur de mesure de force (5) est réalisé en tant que partie d'un agencement de mesure (19), l'agencement de mesure (19) étant fixé au niveau de la première partie de support de garniture (3a) ou au niveau de la deuxième partie de support de garniture (3b) et le capteur de mesure de force (5) pouvant être déplacé dans la direction de mesure (17) à l'intérieur de l'agencement de mesure (19).

8. Dispositif de mesure (1) selon la revendication 7, **caractérisé en ce que** l'agencement de mesure (19) comprend un élément de ressort (21) qui agit sur le capteur de mesure de force (5) et qui agit à l'encontre d'un rapprochement de la première partie de support de garniture (3a) et de la deuxième partie de support de garniture (3b).

9. Dispositif de mesure (1) selon la revendication 8, **caractérisé en ce que** l'élément de ressort (21) précontraint le capteur de mesure de force (5) contre la deuxième partie de support de garniture (3b), de préférence l'agencement de mesure (19) présentant un insert (20) et l'élément de ressort précontraignant le capteur de mesure de force (5) contre l'insert (20).

10. Dispositif de mesure (1) selon la revendication 9, **caractérisé en ce que** le capteur de mesure de force (5) présente une plage de mesure prédéfinie, la somme de la force de précontrainte et de la force de réaction résultant de la flexibilité de l'élément de ressort (21) et du jeu de déplacement maximal entre la première partie de support de garniture (3a) et la deuxième partie de support de garniture (3b) étant située à l'intérieur d'une plage de mesure prédéfinie.

11. Dispositif de mesure (1) selon l'une quelconque des revendications précédentes, **caractérisé par** une unité d'analyse (31) qui est connectée au capteur de mesure de force (5) par transmission de signaux, l'unité d'analyse (31) étant prévue pour déterminer, sur la base d'un signal fourni par le capteur de mesure de force (5), le moment d'abrasion entre le disque de frein et la garniture de frein (103) du frein à disque (100).

12. Frein à disque (100), en particulier pour un véhicule automobile, comprenant un disque de frein (105) et une garniture de frein (103), le disque de frein (105) et la garniture de frein (103) pouvant être déplacés l'un par rapport à l'autre, et un dispositif de mesure (1) pour détecter un moment d'abrasion entre le disque de frein (105) et la garniture de frein (103), **caractérisé en ce que** le dispositif de mesure (1) est réalisé selon l'une quelconque des revendications précédentes.

13. Procédé pour détecter un moment d'abrasion entre un disque de frein (105) et une garniture de frein (103) d'un frein à disque (100), comprenant les étapes suivantes :

- fourniture d'un support de garniture (3a, 3b) pour porter la garniture de frein (103), le support de garniture (3a, 3b) présentant une première partie de support de garniture (3a) et une deuxième partie de support de garniture (3b) ; et
- détection d'une force résultant du moment d'abrasion et agissant sur la garniture de frein (103),
l'étape de détection d'une force résultant du moment d'abrasion et agissant sur la garniture de frein (103) comprenant l'étape suivante :

- détection d'une force agissant entre la première partie de support de garniture (3a) et la deuxième partie de support de garniture (3b), l'étape de détection d'une force agissant entre la première partie de support de garniture (3a) et la deuxième partie de support de garniture (3b) comprenant une des étapes suivantes ou les deux :

- mesure d'une force de pression agissant dans une direction de mesure (17) entre la première partie de support de garniture (3a) et la deuxième partie de support de garniture (3b) au moyen d'un capteur de mesure de force (5), la direction de mesure (17) s'étendant de préférence essentiellement tangentiellement à un axe médian (113) du disque de frein (105), et le capteur de mesure de force (5) étant complètement reçu dans la première partie de support de garniture (3a) et la deuxième partie de support de garniture (3b),
- détermination du moment d'abrasion entre le disque de frein (105) et la garniture de frein (103) sur la base de la force détectée entre la première partie de support de garniture (3a) et la deuxième partie de support de garniture (3b), **caractérisé en ce que** le procédé comprend les deux étapes suivantes :
- application d'une force de précontrainte sur le capteur de mesure de force (5) dans la direction opposée à la direction de mesure (17), la somme de la force de précontrainte et de la force de réaction résultant de la flexibilité de l'élément de ressort (21) et du jeu de déplacement maximal entre la première partie de support de garniture (3a) et la deuxième partie de support de garniture (3b) étant située à l'intérieur d'une plage de mesure prédéfinie de 0 à 1000 N du capteur de mesure de force (5) ;
- déplacement du capteur de mesure de force (5) dans la direction de mesure (17) par rapport à la première partie de support de garniture (3a) et/ou la deuxième partie de support de garniture (3b).

14. Procédé selon la revendication 13, le procédé comprenant l'étape suivante :

- amorçage d'un mouvement relatif entre la première partie de support de garniture (3a) et la deuxième partie de support de garniture (3b), l'amorçage d'un mouvement relatif entre la première partie de support de garniture (3a) et la deuxième partie de support de garniture (3b) comprenant de préférence l'étape suivante :

- réalisation d'un freinage par pressage de la garniture de frein (103) contre le disque de frein (105).

Fig. 1

**Fig. 2**

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014184112 A1
- DE 102006058882 A1